# EUROPEAN PATENT SPECIFICATION

(11) **EP 4 556 207 B1**
(45) Date of publication and mention of the grant of the patent: **11.03.2026**
(21) Application number: 25150909.7
(22) Date of filing: 20.05.2022
(51) Int. Cl.: B29C 70/50, B29B 11/16, B29B 15/12, D04H 1/4242, D04H 1/736, D04H 1/58

(54) **METHOD FOR PRODUCING SHEET MOLDING COMPOUND, DISPERSION ROLLER DEVICE, AND APPARATUS FOR PRODUCING SHEET MOLDING COMPOUND**
VERFAHREN ZUR HERSTELLUNG EINER BAHNENFORMMASSE, DISPERSIONSROLLENVORRICHTUNG UND VORRICHTUNG ZUR HERSTELLUNG EINER BAHNENFORMMASSE
PROCÉDÉ DE PRODUCTION D'UN COMPOSÉ DE MOULAGE DE FEUILLE, DISPOSITIF DE ROULEAU DE DISPERSION ET APPAREIL DE PRODUCTION D'UN COMPOSÉ DE MOULAGE DE FEUILLE

(30) Priority: 19.07.2021 JP 2021118818; 25.03.2022 JP 2022050649
(43) Date of publication of application: 21.05.2025
(62) Divisional of application: 22845683.6
(73) Proprietor: Mitsubishi Chemical Corporation, Tokyo 100-8251 (JP)
(72) Inventor: Oda, Kentaro, Tokyo, 100-8251 (JP); Watanabe, Yasushi, Tokyo, 100-8251 (JP); Samejima, Tadao, Tokyo, 100-8251 (JP); Mizutori, Yukihiro, Tokyo, 100-8251 (JP)
(74) Representative: Hoffmann Eitle

(56) References cited:
- EP-A1- 3 741 895
- JP-A- 2000 017 557

## Description

### [Technical Field]

The present invention mainly relates to a manufacturing method of a sheet molding compound (SMC).

The present invention also relates to a dispersion roller device suitably used for manufacturing an SMC, and an SMC manufacturing apparatus comprising the same.

### [Background Art]

Carbon fiber reinforced plastic (CFRP) is a lightweight composite material with excellent mechanical properties, which is suitable for parts of manned aircraft, unmanned aircraft, automobiles, ships, railway vehicles, and other transportation equipment, and its importance has been increasing in recent years.

An intermediate material referred to as "prepreg" is preferably used when manufacturing CFRP products by compression molding. Prepregs for CFRP products are produced by impregnating a carbon fiber reinforcement with an uncured thermosetting resin composition.

CF-SMC is one type of prepreg, and its manufacturing process involves cutting a continuous carbon fiber bundle with a chopper into short carbon fiber bundles, which are then allowed to fall onto a carrier film travelling with its surface oriented approximately horizontal, to thereby form a carbon fiber mat. CF-SMC is manufactured by impregnating this carbon fiber mat with a thermosetting resin composition.

As regards manufacturing of CF-SMC, it has been proposed to provide a dispersion roll below a chopper in order to disperse short carbon fiber bundles that are let to fall onto a carrier film (Patent Literatures 1 and 2).

### [Citation List]

### [Patent Literature]

Patent Literature 1 : International Patent Application Publication No. 2019/142851
Patent Literature 2: International Patent Application Publication No. 2021/010084

JP 2000 017557 A discloses a method of manufacturing a sheet molding compound, comprising allowing short fiber bundles to fall onto a carrier film travelling with its surface oriented approximately horizontally, while dispersing the short fiber bundles using a dispersion roller device having a rotationally driven dispersion roll, a first side cover, and a second side cover, thereby depositing a fiber mat on the carrier film, and impregnating the fiber mat with a thermosetting resin composition; the dispersion roll comprises shafts extending from the roller. This disclosure also a dispersion roller device used for dispersing short fibre bundles allowed to fall onto a carrier film in production of a sheet moulding compound, comprising a rotational drive dispersion roll, a first side cover, and a second side cover, the dispersion roll comprises a roll body with shafts extending from the roller.

### [Summary of Invention]

### [Technical Problem]

The present invention relates to an SMC manufacturing technology that uses a dispersion roll to disperse short fiber bundles that are allowed to fall onto a carrier film, and its primary purpose is to provide an improvement that is advantageous in achieving at least one of the following: preventing contamination of the SMC manufacturing line, maintaining the cleanliness of mechanical elements included in the SMC manufacturing apparatus, preventing failure of control equipment installed in or around the SMC manufacturing apparatus, and preventing deterioration of the working environment.

In the present specification, problems that can be solved by each embodiment of the present invention may be explicitly or implicitly disclosed.

### [Solution to Problem]

The present invention in its one embodiment provides a manufacturing method of a sheet molding compound, comprising (i) allowing short fiber bundles to fall onto a carrier film travelling with its surface oriented approximately horizontally, while dispersing the short fiber bundles using a dispersion roller device having a rotationally driven dispersion roll, two bearings supporting the dispersion roll, a first side cover, and a second side cover, thereby depositing a fiber mat on the carrier film, and (ii) impregnating the fiber mat with a thermosetting resin composition, wherein the dispersion roller device has a configuration in which the first side cover and the second side cover are disposed between the two bearings; the dispersion roll comprises a roll body, a first roll body-adjoining part, and a second roll body-adjoining part, wherein the roll body comprises a cylinder and a plurality of pins provided on a circumferential surface of the cylinder, and the first roll body-adjoining part and the second roll body-adjoining part respectively adjoin one end and the other end of the roll body in its axial direction; and an inner circumferential surface of a circular opening provided in the first side cover and a cylindrical circumferential surface of the first roll body-adjoining part face each other, while an inner circumferential surface of a circular opening provided in the second side cover and a cylindrical circumferential surface of the second roll body-adjoining part face each other.

The present invention in its another embodiment provides a manufacturing method of a sheet molding compound, comprising (i) allowing short fiber bundles to fall onto a carrier film travelling with its surface oriented approximately horizontally, while dispersing the short fiber bundles using a dispersion roller device having a rotationally driven dispersion roll, two bearings supporting the dispersion roll, a first side cover, and a second side cover, thereby depositing a fiber mat on the carrier film, and (ii) impregnating the fiber mat with a thermosetting resin composition, wherein the dispersion roller device has a configuration in which the first side cover and the second side cover are disposed between the two bearings; the dispersion roll comprises a roll body, a first roll body-adjoining part, and a second roll body-adjoining part, wherein the roll body has n-fold rotational symmetry around its rotation axis, with the proviso that the n is a finite integer of 1 or more and may be 72 or less, and the first roll body-adjoining part and the second roll body-adjoining part respectively adjoin one end and the other end of the roll body in its axial direction; and an inner circumferential surface of a circular opening provided in the first side cover and a cylindrical circumferential surface of the first roll body-adjoining part face each other, while an inner circumferential surface of a circular opening provided in the second side cover and a cylindrical circumferential surface of the second roll body-adjoining part face each other.

The present invention in its still another embodiment provides a dispersion roller device used for dispersing short fiber bundles allowed to fall onto a carrier film in production of a sheet molding compound, comprising a rotational drive dispersion roll, two bearings supporting the dispersion roll, a first side cover, and a second side cover, wherein: the first side cover and the second side cover are disposed between the two bearings; the dispersion roll comprises a roll body, a first roll body-adjoining part, and a second roll body-adjoining part, wherein the roll body comprises a cylinder and a plurality of pins provided on a circumferential surface of the cylinder, and the first roll body-adjoining part and the second roll body-adjoining part respectively adjoin one end and the other end of the roll body in its axial direction; and an inner circumferential surface of a circular opening provided in the first side cover and a cylindrical circumferential surface of the first roll body-adjoining part face each other, while an inner circumferential surface of a circular opening provided in the second side cover and a cylindrical circumferential surface of the second roll body-adjoining part face each other.

The present invention in its still another embodiment provides a dispersion roller device used for dispersing short fiber bundles allowed to fall onto a carrier film in production of a sheet molding compound, comprising a rotational drive dispersion roll, two bearings supporting the dispersion roll, a first side cover, and a second side cover, wherein: the first side cover and the second side cover are disposed between the two bearings; the dispersion roll comprises a roll body, a first roll body-adjoining part, and a second roll body-adjoining part, wherein the roll body has n-fold rotational symmetry around its rotation axis, with the proviso that the n is a finite integer of 1 or more and may be 72 or less, and the first roll body-adjoining part and the second roll body-adjoining part respectively adjoin one end and the other end of the roll body in its axial direction; and an inner circumferential surface of a circular opening provided in the first side cover and a cylindrical circumferential surface of the first roll body-adjoining part face each other, while an inner circumferential surface of a circular opening provided in the second side cover and a cylindrical circumferential surface of the second roll body-adjoining part face each other.

### [Advantageous Effects of Invention]

There is provided an improvement advantageous in achieving at least one of the following: preventing contamination of the SMC manufacturing line, maintaining the cleanliness of mechanical elements included in the SMC manufacturing apparatus, preventing failure of control equipment installed in or around the SMC manufacturing apparatus, and preventing deterioration of the working environment.

### [Brief Description of Drawings]

FIG. 1 is a schematic diagram of an SMC manufacturing apparatus.
FIG. 2 is a schematic diagram of a dispersion roller device.
FIG. 3 is a schematic diagram of a dispersion roll.
FIG. 4 shows an example of pin arrangement on the circumferential surface of a roll body of a dispersion roll.
FIG. 5 shows an example of pin arrangement on the circumferential surface of a roll body of a dispersion roll.
FIG. 6 shows an example of pin arrangement on the circumferential surface of a roll body of a dispersion roll.
FIG. 7 is a schematic diagram of a dispersion roll.
FIG. 8 is a schematic diagram of a dispersion roller device.
FIG. 9 is a schematic diagram for explaining one of the functions of a side cover.
FIG. 10 is a schematic diagram showing a part of a dispersion roller device.
FIG. 11 is a schematic diagram of a dispersion roller device.
FIG. 12 is a schematic diagram showing a positional relationship between two roll bodies in one embodiment of a dispersion roller device.
FIG. 13 is a schematic diagram for explaining one of the functions of a regulator plate.
FIG. 14 is a schematic diagram of a cage roll-type roll body in one embodiment of a dispersion roller device.
FIG. 15 is a schematic diagram showing a roll body of a dispersion roll as viewed from the axial direction thereof.

### [Description of Embodiments]

### 1. Sheet Molding Compound Manufacturing Apparatus

### 1.1. Overview of Apparatus

One embodiment of the present invention relates to a sheet molding compound (SMC) manufacturing apparatus that can be preferably used in a method of manufacturing an SMC comprising the following (i) and (ii), particularly in a method of manufacturing a CF-SMC:
(i) allowing short fiber bundles to fall onto a carrier film travelling with its surface oriented approximately horizontally, while dispersing the short fiber bundles using a dispersion roll, to thereby deposit a fiber mat on the carrier film; and
(ii) impregnating the fiber mat with a thermosetting resin composition.

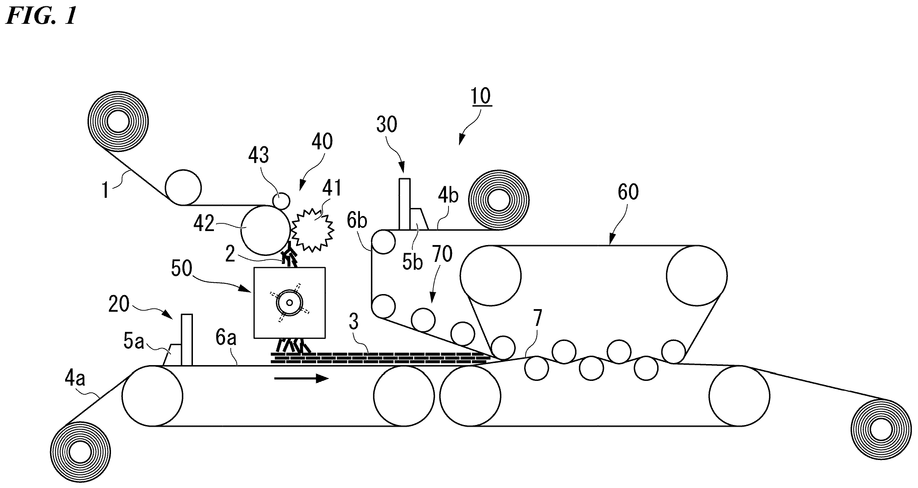

FIG. 1 shows a conceptual diagram of an SMC manufacturing apparatus according to one embodiment.

Referring to FIG. 1, the SMC manufacturing apparatus 10 includes a first applicator 20, a second applicator 30, a chopper 40, a dispersion roller device 50, and an impregnator 60.

The first applicator 20 is used to apply a first resin paste 5a to a first carrier film 4a to form a first resin paste layer 6a.

The second applicator 30 is used to apply a second resin paste 5b to a second carrier film 4b to form a second resin paste layer 6b.

The chopper 40 is disposed above the conveyance path for the first carrier film 4a and is used to cut the continuous fiber bundle 1 into short fiber bundles 2.

Below the chopper 40, the surface of the first carrier film 4a on the conveyance path is held substantially horizontally. This is to prevent the fallen short fiber bundles 2 and the deposited fiber mat 3 from moving due to gravity on the surface of the first carrier film 4a.

The chopper 40 is of a type that is also used in conventional SMC manufacturing apparatuses, and has a cutter roll 41, a receiving roll (rubber roll) 42, and a guide roll 43.

The rotation axes of the cutter roll 41, the receiving roll 42, and the guide roll 43 are all parallel to the T direction.

The T direction is a direction that is horizontal and perpendicular to the M direction. The M direction is the travelling direction of the first carrier film 4a.

The T direction is perpendicular to the paper surface in FIG. 1.

The dispersion roller device 50 is disposed below the chopper 40 in order to disperse the short fiber bundles 2 falling onto the first carrier film 4a.

A laminator 70 for laminating the first carrier film 4a and the second carrier film 4b is disposed upstream of the impregnator 60.

The laminator 70 laminates the first carrier film 4a and the second carrier film 4b together to form a stack 7. In the stack 7, a first resin paste layer 6a, a fiber mat 3, and a second resin paste layer 6b are sandwiched between the first carrier film 4a and the second carrier film 4b. The impregnator 60 is of a type used in conventional SMC manufacturing apparatuses, and has two belt conveyors (upper and lower belt conveyors) for conveying the stack 7 sandwiched between two conveyor belts, and rolls for pinching and pressurizing the stack 7 together with the conveyor belts.

### 1.2. Dispersion Roller Device

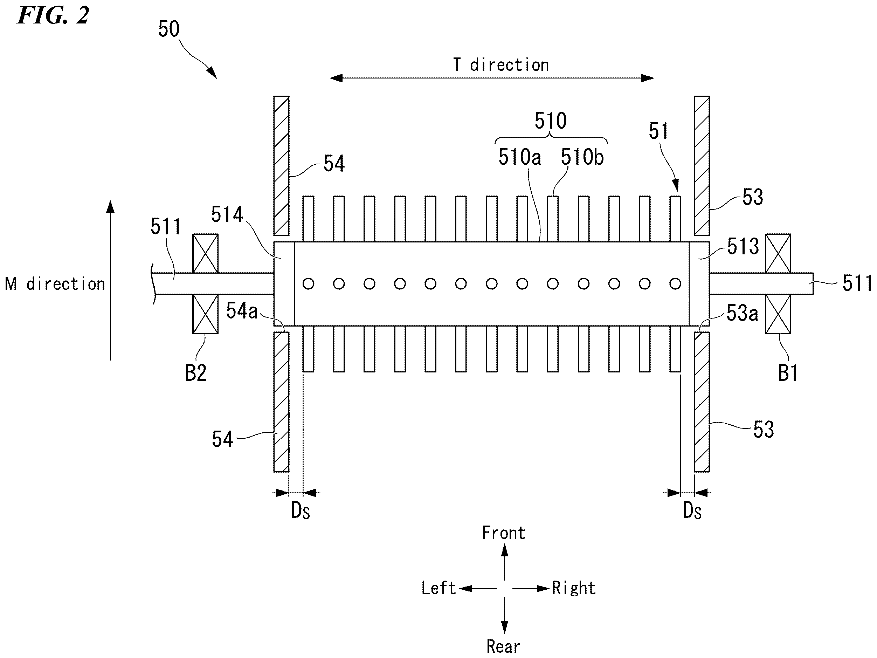

FIG. 2 is a cut diagram of the dispersion roller device 50 included in the SMC manufacturing apparatus 10 as viewed from above. The dispersion roller device 50 has a dispersion roll 51 supported by a pair of bearings B1 and B2, a side cover (right) 53, and a side cover (left) 54.

Both the side cover (right) 53 and the side cover (left) 54 are disposed between the bearing B1 and the bearing B2. Therefore, the side covers and the bearings are not integrated.

FIG. 2 omits depiction of a mechanism for rotationally driving the dispersion roll 51, such as an electric motor and a power transmission system (the same applies to other drawings).

In the present specification, as shown in FIG. 2, the front, rear, left, and right of the dispersion roller device 50 are defined on the premise that the first carrier film 4a travels forward from the back below the dispersion roller device 50, and a person facing forward has their right hand on the right and their left hand on the left.

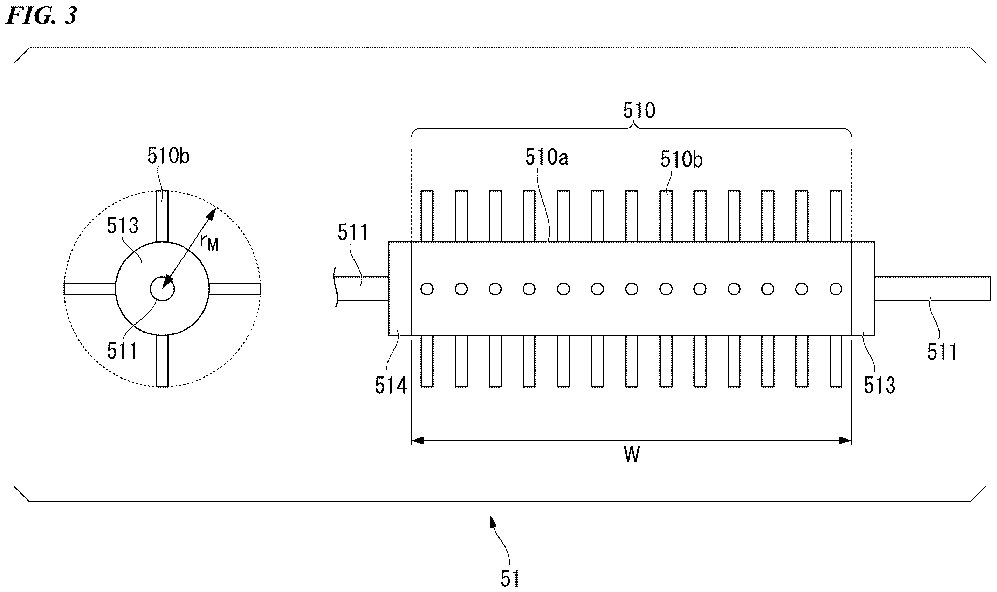

As shown in FIG. 3, the dispersion roll 51 has a roll body 510, a roll body-adjoining part (right) 513 and a roll body-adjoining part (left) 514 which respectively adjoin one end (right end) and the other end (left end) of the roll body 510 in its axial direction, and a shaft 511 penetrating through the roll body and the right and left roll body-adjoining parts in their axial directions.

The roll body 510 is of a pin roll type and has a cylinder 510a and a plurality of pins 510b arranged on the circumferential surface of the cylinder 510a.

Both the roll body 510 and the shaft 511 of the dispersion roll 51 have high rigidity and are formed of a metal material such as stainless steel.

The pins 510b move in the circumferential direction when the dispersion roll 51 is rotated, which allows the short fiber bundles 2 to be hit by the side surfaces of the pins 510b.

Both the roll body-adjoining part (right) 513 and the roll body-adjoining part (left) 514 have cylindrical circumferential surfaces. The material of the roll body-adjoining parts may be different from or the same as that of the cylinder 510a. When the material of the roll body-adjoining parts is different from that of the cylinder, the material of the roll body-adjoining parts may be a metal (including alloys; the same shall apply hereinafter), or the roll body-adjoining parts may be formed entirely or partially of a resin. When the roll body-adjoining parts and the cylinder are formed of the same material, the roll body-adjoining parts 513, 514 may be formed integrally with the cylinder 510a.

The diameter of the cylindrical circumferential surface of the roll body-adjoining parts 513, 514 is larger than the diameter of the shaft 511, and may be the same as or different from the diameter of the cylinder 510a. Preferably, the diameter of the cylindrical circumferential surface of the roll body-adjoining parts 513, 514 is equal to or larger than the diameter of the cylinder 510a. In one example, the radius of the roll body-adjoining parts 513, 514 may be equal to or greater than the maximum radius r_{M} of the roll body 510. The maximum radius r_{M} of the roll body 510 is the radius of a cylinder whose central axis coincides with the rotation axis of the roll body 510 and which circumscribes the roll body 510. In the case of a pin roll type, the maximum radius of the roll body is equal to the distance from the rotation axis to the tip of the longest pin.

The diameter of the roll body-adjoining parts 513, 514 may be significantly smaller than the diameter of the cylinder 510a, which, however, may pose a disadvantage that the gap formed between the cylinder 510a and the side covers 53, 54 is easily contaminated with fiber dust, and is not easily cleanable.

A preferred embodiment of the pin roll type roll body 510 is as follows.

The diameter of the cylinder 510 a is, for example, but not limited to, 30 mm to 300 mm, and may be 60 mm to 150 mm. A larger diameter of the cylinder 510a allows the whole pin 510b to move at a higher circumferential speed when the dispersion roll 51 is rotated, resulting in higher ability to disperse the short fiber bundles 2.

The pin 510b extends perpendicularly to the rotation axis (central axis) of the dispersion roll 51, and may have, for example, but without limitation, a cylindrical shape. The boundary between the end surface and the circumferential surface of the pin 510b may be chamfered.

The diameter of the pin 510b is, for example, but not limited to, 1 mm to 15 mm, and may be 10 mm or less, preferably 5 mm or less.

The length of the pin 510b, that is, the distance from the tip to the base of the pin, is, for example, but not limited to, 10 mm to 150 mm, and may be 10 mm to 100 mm, or may be 10 mm to 50 mm.

Preferably, all of the pins 510b have the same shape and dimensions as each other.

The arrangement of pins 510b on the circumferential surface of cylinder 510a is periodic. When the arrangement of the pins 510b is shifted, for example, in the axial direction of the cylinder by 5 mm or more and less than 20 mm, 20 mm or more and less than 40 mm, or 40 mm or more and 60 mm or less, and also when it is shifted in the circumferential direction of the cylinder by, for example, 10°, 15°, 18°, 20°, 22.5°, 30°, 45°, 60°, 90°, 120° or 180°, it may overlap with the original arrangement. In the example of FIG. 3, when the arrangement of the pins 510b is shifted by 90° in the circumferential direction of the cylinder, it overlaps with the original arrangement; that is, the roll body 510 has 4-fold rotational symmetry around its rotation axis. For example, when shifting the arrangement of the pins 510b by 22.5° in the circumferential direction causes it to overlap with the original arrangement, the roll body has 16-fold rotational symmetry around its rotation axis.

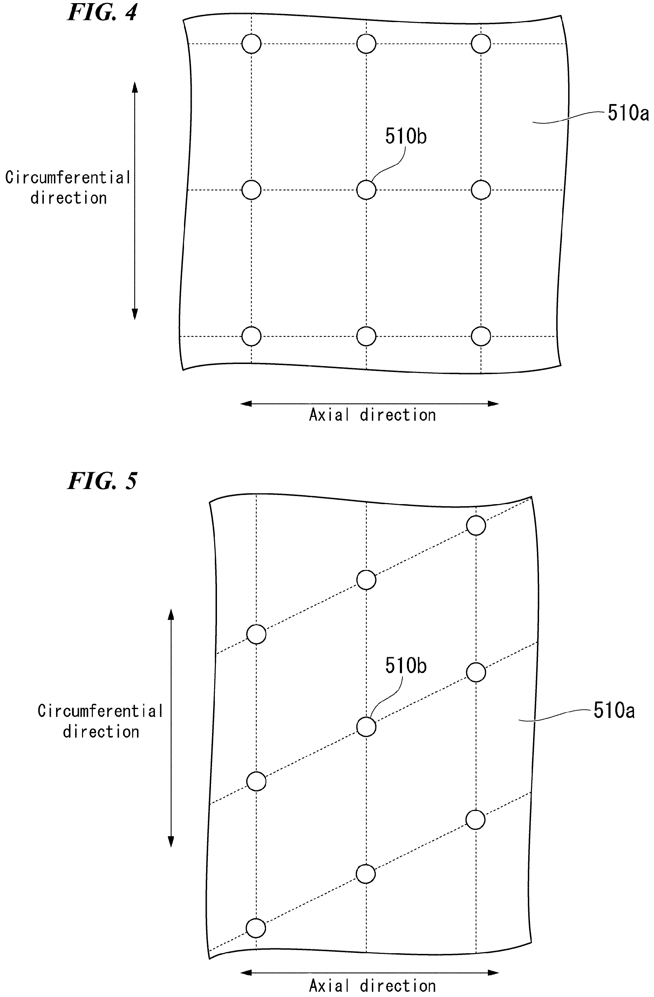

In the dispersion roll 51 shown in FIG. 3, when the circumferential surface of the cylinder 510a is developed in a plane, the pins 510b are disposed, as shown in FIG. 4, at grid positions of quadrilateral grids (indicated by broken lines) composed of grid lines parallel to the axial direction and grid lines parallel to the circumferential direction.

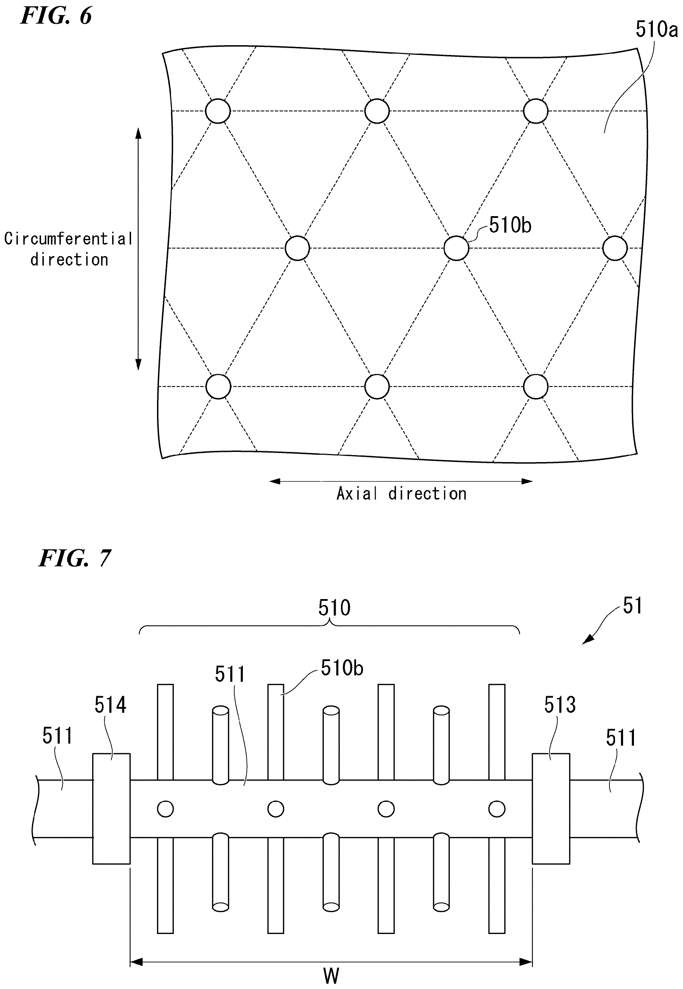

In another typical example, as shown in FIG. 5, the pins 510b may be disposed at grid positions of inclined quadrilateral grids (indicated by broken lines) composed of grid lines inclined relative to the axial direction and grid lines parallel to the circumferential direction. Alternatively, as shown in FIG. 6, the pin 510b may be disposed at each vertex of tessellating equilateral triangles (indicated by broken lines) each with one side being parallel to the axial direction.

In one example, as shown in FIG. 7, the shaft 511 may also serve as a cylinder. However, this embodiment is disadvantageous in that, when the dispersion roll 51 is rotated so that the circumferential speed at the tip of the pin 510b is optimal, fiber dust is likely to deposit on places with a low circumferential speed, such as the surface of the shaft 511, and the base of the pin 510b and its vicinity.

The side cover (right) 53 and the side cover (left) 54 are preferably, but not limited to be, formed of metal plates. When a metal plate is used, its thickness is, for example, 3 mm to 5 mm, and may be larger or smaller than this range depending on the required rigidity and strength.

On both the right and left sides, the horizontal distance D_{S} from the side cover 53, 54 to the pin 510b which is closest to the side cover in terms of horizontal distance is 60 mm or less, 50 mm or less, 40 mm or less, 30 mm or less, 20 mm or less, or 10 mm or less.

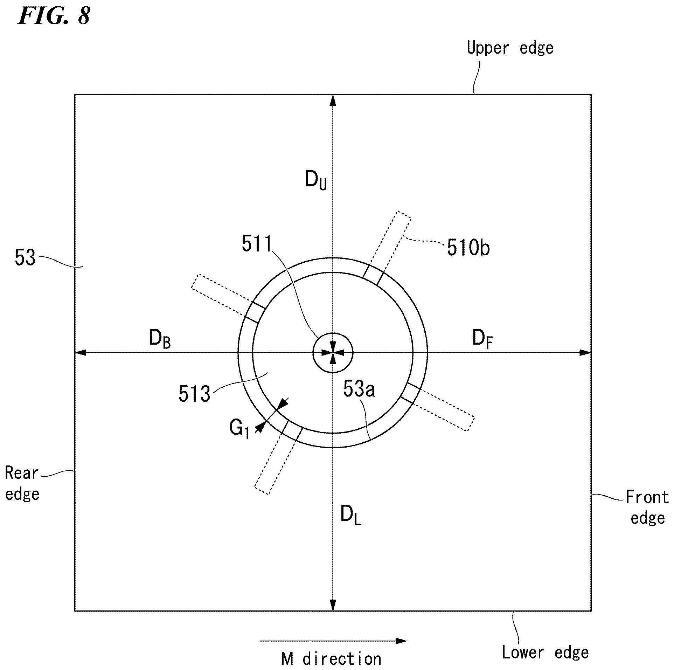

As shown in FIG. 8, the side cover (right) 53 is provided with a circular opening (right) 53a, and as shown in FIG. 2, the inner circumferential surface of this circular opening (right) 53a faces the cylindrical circumferential surface of the roll body-adjoining part (right) 513 located immediately to the right of the roll body 510. Similarly, the side cover (left) 54 is provided with a circular opening (left) 54a, and the inner circumferential surface of the circular opening (left) 54a faces the cylindrical circumferential surface of the roll body-adjoining part (left) 514 located immediately to the left of the roll body 510.

By adopting such a configuration, the short fiber bundles 2 and the fiber dust generated by dispersing the short fiber bundles 2 with the dispersion roll 51 become less likely to leak to the outside of the side covers 53 and 54. This is advantageous in achieving at least one of the following: preventing contamination of the SMC manufacturing line, maintaining the cleanliness of mechanical elements included in the SMC manufacturing apparatus, preventing failure of control equipment installed in or around the SMC manufacturing apparatus, and preventing deterioration of the working environment.

It would be obvious to those skilled in the art that this effect becomes higher as the following gaps decrease: gap G₁ between the inner circumferential surface of the circular opening (right) 53a of the side cover (right) 53 and the cylindrical circumferential surface of the roll body-adjoining part (right) 513, and gap G₂ between the inner circumferential surface of the circular opening (left) 54a of the side cover (left) 54 and the cylindrical circumferential surface of the roll body-adjoining part (left) 514.

The gaps G₁ and G₂ are each, for example, 10 mm or less, preferably 5 mm or less, more preferably 3 mm or less, even more preferably 1 mm or less, and may be 0.5 mm or less. The gaps G₁ and G₂ are usually smaller than the length of the pin 510b and are preferably 1/2 or less thereof, more preferably 1/5 or less thereof, even more preferably 1/10 or less thereof (provided that the length of the pin 510b in this context is that of the longest pin when not all the pins have the same length).

The benefit obtained by suppressing the leakage of fiber dust to the outside of the side cover is particularly large when the short fiber bundle 2 comprises carbon fiber. This is because the carbon fiber generally has a small filament diameter of less than 10 µm, and therefore generates fine, floatable fiber dust. Another reason is that fiber dust generated from the carbon fiber is electrically conductive, and therefore can impede the operation of electrical and electronic equipment.

The gaps can be reduced to about 0.2 mm by using a metal for one of materials of the inner circumferential surface of the circular opening 53a, 54a and the cylindrical circumferential surface of the roll body-adjoining part 513, 514, while using a resin for the other.

A preferred example of the resin mentioned here is a resin generally used as a material for slide bearings, such as a polytetrafluoroethylene resin (PTFE), polyacetal, nylon, polyethylene, a phenol resin, polyimide, polyphenylene sulfide, polyetheretherketone, and polyamideimide.

The side cover 53 may be assembled from a plurality of parts, and the same applies to the side cover 54.

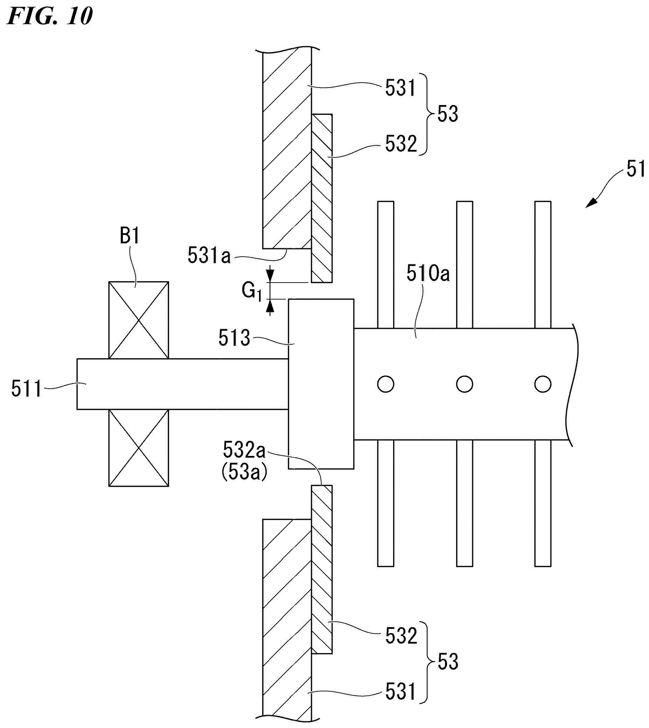

In the example shown in FIG. 10, the side cover 53 is composed of a cover main body 531 and a ring 532, where the ring 532 having a hole 532a smaller in diameter than the main body opening 531a is fixed at the position of the main body opening 531a provided in the cover main body 531. In such an instance, the hole 532a of the ring 532 corresponds to the circular opening 53a provided in the side cover 53, and the cylindrical circumferential surface of the roll body-adjoining part (right) 513 faces the inner circumferential surface of the hole 532a of the ring 532.

In one example, when preparing the dispersion roller device 50, the roll body-adjoining part (right) 513 is first inserted into the hole 532a of the ring 532, and then the ring 532 is fixed to the cover main body 531. During this fixing process, the position of the ring 532 is adjusted so that the inner circumferential surface of the hole 532a and the roll body-adjoining part (right) 513 do not come into contact with each other. In order to enable such adjustment, the position of the ring 532 when fixed to the cover main body 531 is variable within a plane perpendicular to the rotation axis of the dispersion roll 51. This measure is particularly advantageous when preparing the dispersion roller device 50 in which the gap G₁ between the cylindrical circumferential surface of the roll body-adjoining part 513 and the hole 532a of the ring 532 is small.

The cover main body 531 is preferably a metal plate. The material of the ring 532 may be the same as or different from that of the cover main body 531.

When the material of the ring 532 is resin, it is preferable that at least the cylindrical circumferential surface of the roll body-adjoining part 513 is formed of a metal.

When the material of the ring 532 is a metal, it is preferable that at least the cylindrical circumferential surface of the roll body-adjoining part 513 is formed of a resin.

The roll body-adjoining part 513 may be composed of two or more parts, and for example, a portion including the cylindrical circumferential surface and the other portions may be formed of different materials.

The descriptions presented above with reference to FIG. 10 are applicable to the side cover (left) 54 and the roll body-adjoining part (left) 514 in exactly the same manner.

In order to allow the side cover 53 to work more effectively, it is preferable that the vertical distance D_{U} from the rotation axis of the dispersion roll 51 to the upper edge of the side cover 53 is larger than the maximum radius r_{M} of the roll body 510 in the dispersion roll 51 (see FIG. 8).

Similarly, it is preferable that the vertical distance D_{L} from the rotation axis of the dispersion roll 51 to the lower edge of the side cover 53, the horizontal distance D_{F} from the rotation axis of the dispersion roll 51 to the front edge of the side cover 53, and the horizontal distance D_{B} from the rotation axis of the dispersion roll 51 to the rear edge of the side cover 53 are each larger than the maximum radius r_{M} of the roll body 510.

The same applies to the side cover 54, and it is preferable that the vertical distances from the rotation axis of the dispersion roll 51 to the upper and lower edges of the side cover 54 and the horizontal distances from the rotation axis of the dispersion roll 51 to the front and rear edges of the side cover 54 are each larger than the maximum radius r_{M} of the roll body 510.

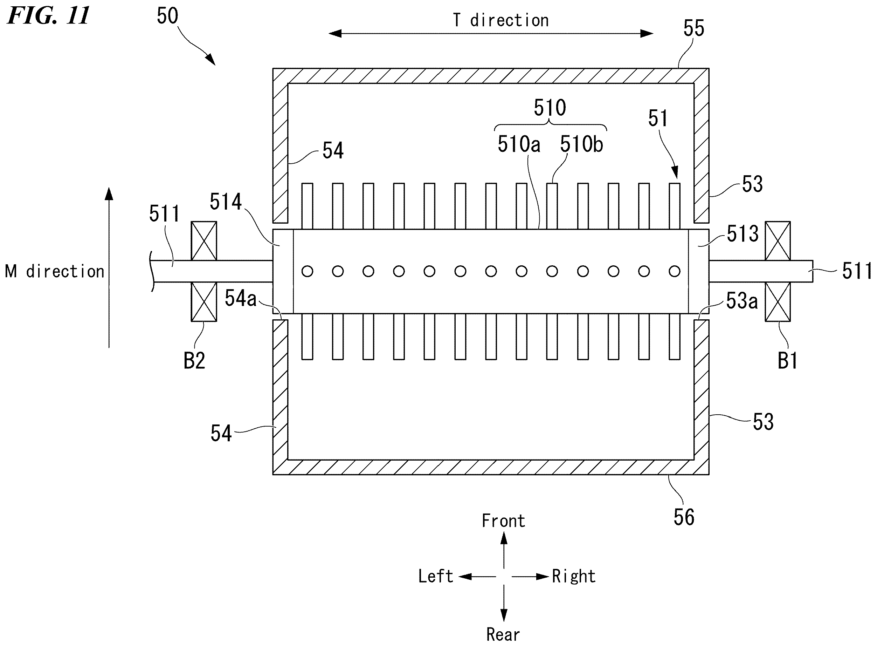

As shown in FIG. 11, in one example, a front cover 55 may be disposed in front of the roll body 510 of the dispersion roll 51, while disposing a rear cover 56 behind the roll body 510 of the dispersion roll 51. In the example of FIG. 11, two side covers 53, 54, a front cover 55, and a rear cover 56 are integrated to form an enclosure surrounding the roll body 510.

A seam may be present between the side covers 53, 54 and the front cover 55, and the same applies to the border between the side covers 53, 54 and the rear cover 56.

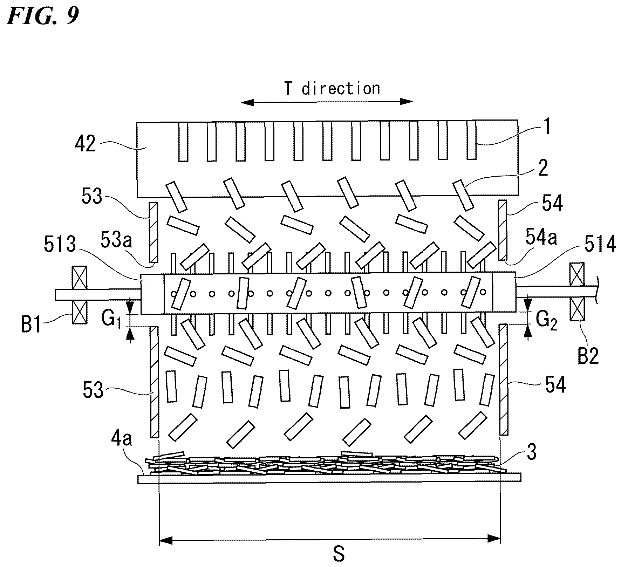

As shown in FIG. 9, in one example, the side cover (right) 53 and the side cover (left) 54 may be given a role as a regulator that regulates the width (dimension in the T direction) of the fiber mat 3 formed on the first carrier film 4a. In FIG. 9, the width of the fiber mat 3 deposited on the first carrier film 4a reflects the spacing S between the lower edges of the two side covers 53, 54.

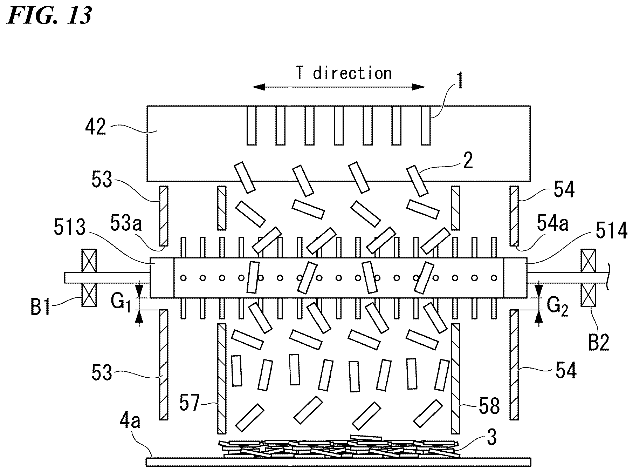

In another example, as shown in FIG. 13, two regulator plates 57, 58 each parallel to the M direction may be disposed between the side cover (right) 53 and the side cover (left) 54. The roll body 510 of the dispersion roll 51 is passed through circular holes respectively formed in the regulator plates 57, 58. The radius of the circular holes is only slightly larger than the maximum radius r_{M} of the roll body 510, allowing almost all of the short fiber bundles 2 to fall through between the two regulator plates 57, 58 onto the first carrier film 4a. The lower edges of the two regulator plates 57, 58 are positioned close enough to the upper surface of the first carrier film 4a to allow the width of the fiber mat formed on the first carrier film 4a to reflect the distance between the two regulator plates 57, 58.

A small portion of the short fiber bundles 2 as well as the fiber dust generated from the short fiber bundles 2 may pass through the circular holes formed in the regulator plates 57, 58, but hardly leak to the outside of the side covers 53, 54.

### 1.3. First Modified Embodiment

In the first modified embodiment, the number of dispersion rolls provided in the dispersion roller device is two or more. Every one of the two or more dispersion rolls is provided with a roll body-adjoining part having a cylindrical circumferential surface, and the cylindrical circumferential surface is configured to face the inner circumferential surface of a circular opening provided in the side cover.

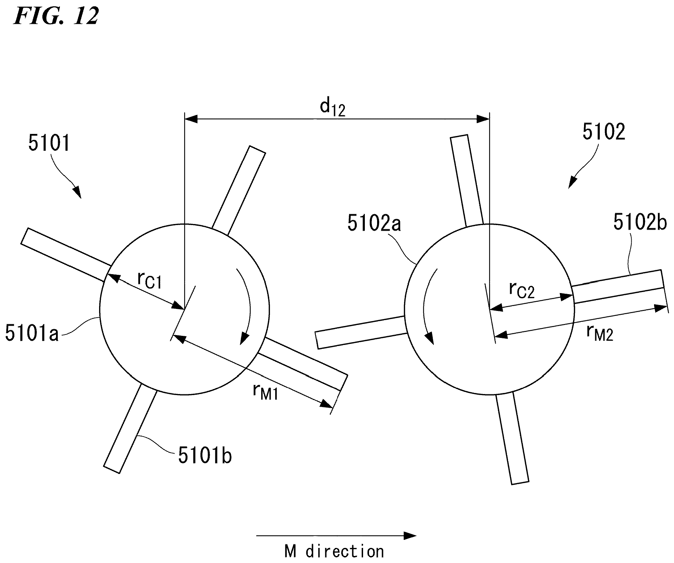

In a preferred example, the dispersion roller device may be provided with two dispersion rolls aligned one behind the other. FIG. 12 shows an example of the positional relationship of the roll bodies when two dispersion rolls (a rear dispersion roll and a front dispersion roll) are arranged in this manner.

In order for more short fiber bundles to be struck by the pins 5101b, 5102b provided on the roll body 5101 of the rear dispersion roll and the roll body 5102 of the front dispersion roll when passing through between these roll bodies, it is preferable that, as shown in FIG. 12, the sum of the maximum radius r_{M1} of the roll body 5101 in the rear dispersion roll and the maximum radius r_{M2} of the roll body 5102 in the front dispersion roll is larger than the distance d₁₂ between the rotating axes of these two dispersion rolls.

The sum of the maximum radius r_{M1} of the roll body of the rear dispersion roll and the cylinder radius r_{C2} of the roll body 5102 of the front dispersion roll, and the sum of the cylinder radius r_{C1} of the roll body 5101 of the rear dispersion roll and the maximum radius r_{M2} of the roll body of the front dispersion roll are both smaller than the distance d₁₂ between the rotational axes of the two dispersion rolls.

The arrangement in FIG. 12 is an example and non-limiting.

The arrangement shown in FIG. 12 may be modified to equalize the sum of the maximum radius r_{M1} of the roll body in the rear dispersion roll and the maximum radius r_{M2} of the roll body in the front dispersion roll with the distance d₁₂ between the rotational axes of the two dispersion rolls.

Further, the sum of the maximum radius r_{M1} of the roll body in the rear dispersion roll and the maximum radius r_{M2} of the roll body in the front dispersion roll may be slightly smaller than the distance d₁₂ between the rotating axes of the two dispersion rolls. However, the difference {d₁₂ - (r_{M1} + r_{M2})} is preferably 10 mm or less, more preferably 5 mm or less.

When two dispersion rolls aligned one behind the other are provided in the dispersion roller device, it is preferable that, as shown in FIG. 12, the rear dispersion roll is rotated such that the pins 5101b of the roll body move downward from above on its side facing the front dispersion roll, and the front dispersion roll is rotated such that the pins 5102b of the roll body move downward from above on its side facing the rear dispersion roll.

### 1.4. Second Modified Embodiment

In the second modified embodiment, the roll body of the dispersion roll in the dispersion roller device is altered from pin roll type to cage roll type.

A cage roll type roll body has a structure in which a plurality of rods extending in the direction of the rotation axis are arranged at equal intervals on a cylinder surface centered on the rotation axis. The rods move in the circumferential direction when the dispersion roll is rotated, which allows the short fiber bundles to be struck by the side surfaces of the rods. Taut wires may be used instead of the rods.

The material of the rods is preferably a metal. The cross-sectional shape of the rods is not limited, and may be circular, oval, square, rectangular, hexagonal, or any of various other shapes.

The cage roll type roll body may have a superimposed structure formed by combination of the above-mentioned structure, that is, a structure in which a plurality of rods extending in the direction of the rotation axis are arranged at equal intervals on each of two or more concentric cylinder surfaces having mutually different radii.

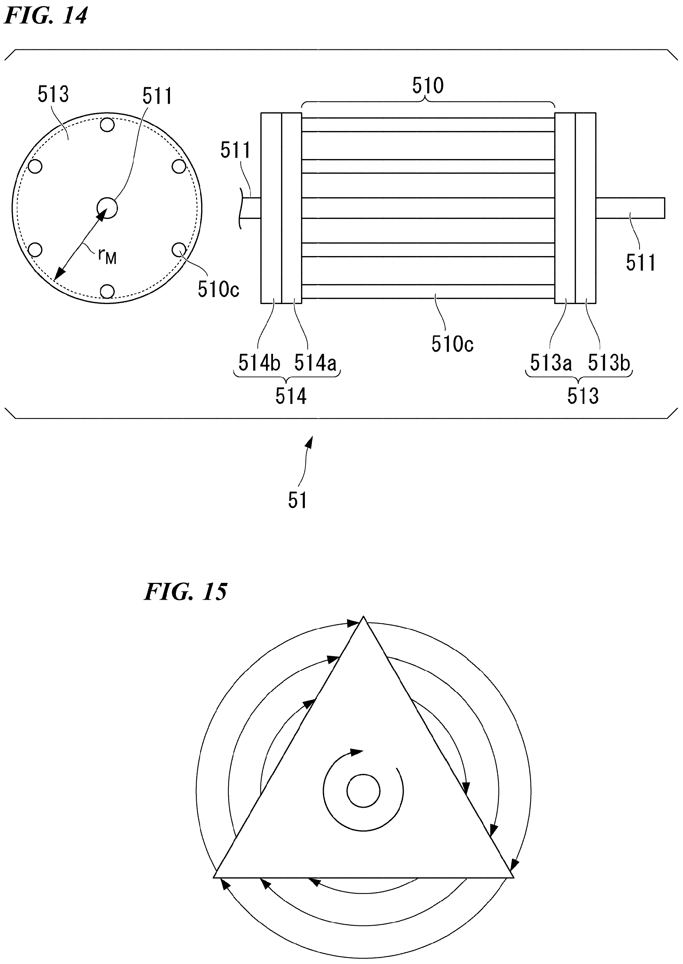

FIG. 14 shows an example of a dispersion roll having a cage roll type roll body, which the dispersion roller device may have in the second modified embodiment.

Referring to FIG. 14, the dispersion roll 51 has a roll body 510, a roll body-adjoining part (right) 513 and a roll body-adjoining part (left) 514 which respectively adjoin one end (right end) and the other end (left end) of the roll body 510 in its axial direction, and a shaft 511 penetrating through the roll body and the right and left roll body-adjoining parts in their axial directions.

The roll body 510 comprises six round bars 510c spanned between a support member 513a included in the roll body-adjoining part (right) 513 and a support member 514a included in the roll body-adjoining part (left) 514. Since the six round bars 510c are arranged at equal intervals on a cylindrical surface centered on the central axis of the shaft 511, the roll body 510 has 6-fold rotational symmetry.

The diameter of the round bars 510c is, for example, 3 mm or less, may be 1.5 mm or less, and may be 1 mm or more.

The maximum radius r_{M} of the roll body 510, that is, a radius of a cylinder whose central axis coincides with the rotation axis of the roll body 510 and which circumscribes the roll body 510 (a cylinder circumscribing the six round bars 510c) may be, for example, in the range of 100 mm or more and 200 mm or less, but is not limited thereto.

The roll body-adjoining part (right) 513 comprises a support member 513a and a disk 513b, and the roll body-adjoining part (left) 514 comprises a support member 514a and a disk 514b. When the dispersion roll 51 is built into the dispersion roller device, the cylindrical circumferential surface of the disk 513b faces the inner circumferential surface of the circular opening (right) provided in the side cover (right), and the cylindrical circumferential surface of the disk 514b faces the inner peripheral surface of the circular opening (left) provided in the side cover (left).

The radius of the cylindrical circumferential surface of the disk 513b, 514b is preferably equal to or larger than the maximum radius r_{M} of the roll body 510.

The diameter of the cylindrical circumferential surface of the disk 513b, 514b may be significantly smaller than the diameter of the support member 513a, 514a, which, however, may pose a disadvantage that the gap formed between the support member 513a, 514a and the side cover 53, 54 is easily contaminated with fiber dust, and is not easily cleanable.

In one example, the support member 513a, 514a may also serve as the disk 513b, 514b. That is, when the dispersion roll 51 is built into the dispersion roller device, the inner circumferential surface of the circular opening (right) provided in the side cover (right) faces the cylindrical circumferential surface of the support member 513a, and the inner circumferential surface of the circular opening (left) provided in the side cover (left) faces the cylindrical circumferential surface of the support member 514a.

When the roll body 510 is of a cage roll type, the horizontal distance from each of the side covers 53, 54 to the roll body 510 may be 60 mm or less, 50 mm or less, 40 mm or less, 30 mm or less, 20 mm or less, or 10 mm or less.

### 1.5. Other Embodiments

The roll body of the dispersion roll in the dispersion roller device is not limited to the pin roll type or the cage roll type, as long as it has n-fold rotational symmetry around its rotation axis, with the proviso that the n is a finite integer of 1 or more. The n is preferably 2 or more and 72 or less, or may be 3 or more, and may be 36 or less or 24 or less.

For example, the roll body may be a triangular prism whose cross section perpendicular to the rotation axis is an equilateral triangle, or may have a shape in which such a triangular prism is twisted about the rotation axis. These are examples of the roll body having 3-fold rotational symmetry around its rotation axis.

As shown in FIG. 15, when such a roll body is rotated, all of its three side surfaces move in the circumferential direction except for the position at which the direction of the normal coincides with the radial direction of the roll body.

The maximum radius of the roll body is defined as the radius of a cylinder of which centerline is the rotation axis of the roll body and which circumscribes the roll body, regardless of the structure of the roll body.

The radii of the cylindrical circumferential surfaces of the roll body-adjoining parts individually adjoining one end and the other end of the roll body in its axial direction may preferably be equal to or larger than the maximum radius of the roll body 510.

### 2. Method of Manufacturing Sheet Molding Compound

The procedure for manufacturing SMC using the SMC manufacturing apparatus 10 is explained as follows.

First, a continuous fiber bundle 1 is drawn out from a fiber package prepared in advance. The continuous fiber bundle 1 may be drawn out from a bobbin package on a creel by unwinding from outside, or may be drawn out from a package from which a bobbin has been pulled out by unwinding from inside.

The continuous fiber bundle 1 preferably, but not exclusively, comprises carbon fiber, and may be one which is formed of fiber other than carbon fiber, such as glass fiber and aramid fiber.

When the continuous fiber bundle 1 is a carbon fiber bundle, the filament number per bundle may be, but is not limited to, 3,000 to 100,000, for example. The continuous fiber bundle may be partially split into a plurality of sub-bundles in advance.

A plurality of continuous fiber bundles 1 are aligned parallel to each other, and then supplied to a chopper 40 from a direction perpendicular to the T direction to be cut into short fiber bundles 2.

When manufacturing CF-SMC, the fiber length of the short fiber bundles 2 is, for example, 5 mm to 100 mm, preferably 10 mm to 60 mm, more preferably 10 mm to 30 mm, and typically 0.5 inch (about 1.3 cm), 1 inch (about 2.5 cm), 2 inches (about 5.1 cm), etc., but is not limited thereto.

In a modified example, instead of using the chopper 40 to produce short fiber bundles 2 from continuous fiber bundles 1 on the spot, a hopper or the like may be used in order for short fiber bundles 2 prepared beforehand in a separate process to fall from above onto the dispersion roller device 50.

The short fiber bundles 2 fall onto the first carrier film 4a while being dispersed by the dispersion roller device 50 to form a fiber mat 3.

When manufacturing CF-SMC, the operating condition of the dispersion roller device 50 (rotation speed of the dispersion roll 51) may preferably be set so that a fiber bundle with filament number of 500 or less and a single filament are not generated, or even when they are generated, the amount thereof in the fiber mat 3 is suppressed to less than 1 % by weight.

Even when manufacturing CF-SMC, in an instance where the continuous fiber bundle 1 is a carbon fiber bundle that has been partially split into a plurality of sub-bundles in advance, and the filament number of each sub-bundle is less than 2K, the operating condition of the dispersion roller device 50 may preferably be set so that generation of fiber bundles with filament number of 0.2K or less is prevented as much as possible, and, even if generated, the amount of such fiber bundles in the fiber mat 3 is suppressed to less than 1 % by weight.

Further, when manufacturing CF-SMC, it is desirable to determine the operating condition of the dispersion roller device 50 also in consideration of ensuring that the areal weight of the fiber mat 3 does not become significantly non-uniform due to the airflow generated by the rotation of the dispersion roller 51.

In an embodiment in which the dispersion roller device 50 has two pin roll type dispersion rolls arranged side by side with their rotational axes parallel to each other, when each dispersion roll is, as shown in FIG. 12, rotationally driven such that its pins move downward from above on its side facing the other dispersion roll, it is difficult for the fiber mat 3 to have a front side and a back side even if the short fiber bundles 2 have a weight distribution.

The reason is that both the heavy short fiber bundles and the light short fiber bundles fall onto the first carrier film through the gap between the roll bodies of the two dispersion rolls. In other words, the position at which the heavy short fiber bundles fall and the position at which the light short fiber bundle fall are less likely to shift along the travelling direction of the first carrier film.

Before depositing the fiber mat 3, a first resin paste 5a is applied to the first carrier film 4a using a first applicator 20.

The first resin paste 5a is a thermosetting resin composition, and examples of its base resins include, but are not limited to, a vinyl ester resin (also referred to as an epoxy acrylate resin), an unsaturated polyester resin, an epoxy resin, a polyimide resin, a maleimide resin and a phenolic resin. A mixed resin of a vinyl ester resin and an unsaturated polyester resin may also be used as the base resin. A curing agent, a polymerization inhibitor, a thickener, a reactive diluent, a low shrinkage agent, a flame retardant, an antibacterial agent, etc. are blended into the first resin paste 5a as necessary.

In a separate process, a second resin paste 5b having the same composition as the first resin paste 5a is applied to a second carrier film 4b using a second applicator 30.

The second carrier film 4b with its surface coated with the second resin paste 5b facing downward is superposed on the first carrier film 4a having the fiber mat 3 placed on its upper surface, and the resulting stack 7 is pressurized with an impregnator 60 to impregnate the fiber mat 3 with the thermosetting resin composition, thereby forming a resin-impregnated fiber mat.

The resin-impregnated fiber mat is wound onto a bobbin while remaining sandwiched between the first carrier film 4a and the second carrier film 4b. A sheet molding compound is completed after the process of thickening the resin-impregnated fiber mat.

Sheet molding compounds are used for molding FRP (fiber reinforced plastic) products using, for example, a compression molding method. In particular, the applications of CFRP products that can be manufactured using CF-SMC are wide-ranging, and include parts used in aircraft, unmanned aircraft, automobiles, ships, and various other transportation equipment, as well as sporting goods and leisure goods.

The present invention is described above with reference to specific embodiments. However, each embodiment is presented as an example, and does not limit the scope of the present invention. Each embodiment described in the present specification can be modified in various ways within the scope of the invention as defined in the appended claims.

### [Reference Signs List]

1: Continuous fiber bundle
2: Short fiber bundles
3: Fiber mat
4a: First carrier film
4b: Second carrier film
5a: First resin paste
5b: Second resin paste
6a: First resin paste layer
6b: Second resin paste layer
7: Stack
10: SMC manufacturing apparatus
20: First applicator
30: Second applicator
40: Chopper
50: Dispersion roller device
51: Dispersion roll
510: Roll body
511: Shaft
513, 514: Roll body-adjoining part
53, 54: Side cover
531: Cover main body
532: Ring
55: Front cover
56: Rear cover
60: Impregnator
70: Laminator

## Claims

1. A method of manufacturing a sheet molding compound, comprising (i) allowing short fiber bundles (2) to fall onto a carrier film (4a) travelling with its surface oriented approximately horizontally, while dispersing the short fiber bundles (2) using a dispersion roller device (50) having a rotationally driven dispersion roll (51), two bearings supporting the dispersion roll, a first side cover (53), and a second side cover (54), thereby depositing a fiber mat (3) on the carrier film (4a), and (ii) impregnating the fiber mat (3) with a thermosetting resin composition, wherein the dispersion roller device (50) has a configuration in which the first side cover (53) and the second side cover (54) are disposed between the two bearings; the dispersion roll (51) comprises a roll body (510), of a first roll body-adjoining part (513), and a second roll body-adjoining part (514) wherein the roll body (510) has n-fold rotational symmetry around its rotation axis, with the proviso that the n is a finite integer of 1 or more, and the first roll body-adjoining part (513) and the second roll body-adjoining part (514) respectively adjoin one end and the other end of the roll body (510) in its axial direction; and an inner circumferential surface of a circular opening provided in the first side cover and a cylindrical circumferential surface of the first roll body-adjoining part face each other, while an inner circumferential surface of a circular opening provided in the second side cover and a cylindrical circumferential surface of the second roll body-adjoining part face each other.

2. The method of manufacturing according to claim 1, wherein a radius of the cylindrical circumferential surface of the first roll body-adjoining part and a radius of the cylindrical circumferential surface of the second roll body-adjoining part are equal to or greater than a maximum radius of the roll body.

3. The method of manufacturing according to claim 1 or 2, wherein the roll body is cage roll type, and has a plurality of rods or wires spanned between a support member contained in the first roll body-adjoining part and a support member contained in the second roll body-adjoining part.

4. The method of manufacturing according to any of claims 1 to 3, wherein the inner circumferential surface of the circular opening provided in each of the first side cover and the second side cover is made of a resin, and the cylindrical circumferential surface of each of the first roll body-adjoining part and the second roll body-adjoining part is made of a metal.

5. The method of manufacturing according to any of claims 1 to 4, wherein the inner circumferential surface of the circular opening provided in each of the first side cover and the second side cover is made of a metal, and the cylindrical circumferential surface of each of the first roll body-adjoining part and the second roll body-adjoining part is made of a resin.

6. The method of manufacturing according to claim 4 or 5, wherein the resin comprises any selected from a tetrafluoroethylene resin, polyacetal, nylon, polyethylene, a phenol resin, polyimide, polyphenylene sulfide, polyetheretherketone, and polyamide-imide.

7. The method of manufacturing according to any of claims 1 to 6, wherein a gap between the inner circumferential surface of the circular opening provided in the first side cover and the cylindrical circumferential surface of the first roll body-adjoining part, and a gap between the inner circumferential surface of the circular opening provided in the second side cover and the cylindrical circumferential surface of the second roll body-adjoining part are both 10 mm or less, 5 mm or less, 3 mm or less, 1 mm or less, or 0.5 mm or less.

8. The method of manufacturing according to any of claims 1 to 7, wherein the dispersion roller device satisfies at least one of conditions (A) and (B) below:
(A) the first side cover comprises a first cover main body and a first ring fixed to the first cover main body, and a hole of the first ring corresponds to the circular opening provided in the first side cover; and
(B) the second side cover comprises a second cover main body and a second ring fixed to the second cover main body, and a hole of the second ring corresponds to the circular opening provided in the second side cover.

9. The method of manufacturing according to claim 8, which further comprises providing the dispersion roller device, wherein in the providing of the dispersion roller device, when the dispersion roller device satisfies the condition (A), the first roll body-adjoining part is inserted through the hole of the first ring, followed by fixing the first ring to the first cover main body, while when the dispersion roller device satisfies the condition (B), the second roll body-adjoining part is inserted through the hole of the second ring, followed by fixing the second ring to the second cover main body.

10. The method of manufacturing according to claim 8 or 9, wherein when the dispersion roller device satisfies the condition (A), a position of the first ring fixed to the first cover main body is variable within a plane perpendicular to the rotation axis of the dispersion roll, while when the dispersion roller device satisfies the condition (B), a position of the second ring fixed to the second cover main body is variable within a plane perpendicular to the rotation axis of the dispersion roll.

11. The method of manufacturing according to any of claims 1 to 10, wherein a vertical distance from the rotation axis of the dispersion roll to each of upper and lower edges of the first side cover, a horizontal distance from the rotation axis of the dispersion roll to each of front and rear edges of the first side cover, a vertical distance from the rotation axis of the dispersion roll to each of upper and lower edges of the second side cover, and a horizontal distance from the rotation axis of the dispersion roll to each of front and rear edges of the second side cover are each larger than a maximum radius of the roll body.

12. The method of manufacturing according to any of claims 1 to 11, wherein a pair of regulator plates are disposed between the first side cover and the second side cover in parallel to the travelling direction of the carrier film, and the roll body of the dispersion roll is passed through both an opening in one of the pair of regulator plates and an opening in the other one of the pair of regulator plates.

13. The method of manufacturing according to claim 12, wherein the opening in one of the pair of regulator plates and the opening in the other one of the pair of regulator plates are both circular and have a radius larger than a maximum radius of the roll body.

14. The method of manufacturing according to any of claims 1 to 13, wherein the short fiber bundles comprises carbon fibers.

15. A dispersion roller device (50) used for dispersing short fiber bundles (2) allowed to fall onto a carrier film (4a) in production of a sheet molding compound, comprising a rotational drive dispersion roll (51) two bearings supporting the dispersion roll, a first side cover (53), cover and a second side cover (54), wherein: the first side cover and the second side cover are disposed between the two bearings; the dispersion roll comprises a roll body (510), a first roll body-adjoining part (513), and a second roll body-adjoining part (514), wherein the roll body comprises a cylinder and a plurality of pins provided on a circumferential surface of the cylinder, and the first roll body-adjoining part and the second roll body-adjoining part respectively adjoin one end and the other end of the roll body in its axial direction; and an inner circumferential surface of a circular opening provided in the first side cover and a cylindrical circumferential surface of the first roll body-adjoining part face each other, while an inner circumferential surface of a circular opening provided in the second side cover and a cylindrical circumferential surface of the second roll body-adjoining part face each other.

16. The device according to claim 15, wherein a radius of the cylindrical circumferential surface of the first roll body-adjoining part and a radius of the cylindrical circumferential surface of the second roll body-adjoining part are equal to that of the cylinder.

17. The device according to claim 15, wherein a radius of the cylindrical circumferential surface of the first roll body-adjoining part and a radius of the cylindrical circumferential surface of the second roll body-adjoining part are larger than that of the cylinder.

18. The device according to any of claims 15 to 17, wherein the cylinder has a diameter of 30 mm to 300 mm.

19. The device according to any of claims 15 to 18, wherein the dispersion roll has a shaft penetrating through the roll body, the first roll body-adjoining part and the second roll body-adjoining part in its axial direction, and a diameter of the shaft is smaller than that of the cylinder.

20. The device according to any of claims 15 to 19, wherein a gap between the inner circumferential surface of the circular opening provided in the first side cover and the cylindrical circumferential surface of the first roll body-adjoining part, and a gap between the inner circumferential surface of the circular opening provided in the second side cover and the cylindrical circumferential surface of the second roll body-adjoining part are both smaller than a length of the longest pin among the plurality of pins.

21. The device according to any of claims 15 to 20, wherein the dispersion roller device has a first dispersion roll and a second dispersion roll, each as the dispersion roll, which are arranged side by side so that their rotation axes are parallel to each other.

22. The device according to claim 21, wherein the first dispersion roll is rotationally driven such that its pins move downward from above on its side facing the second dispersion roll, and the second dispersion roll is rotationally driven such that its pins move downward from above on its side facing the first dispersion roll.

23. The device according to claim 21 or 22, wherein a sum of a maximum radius of the roll body of the first dispersion roll and a maximum radius of the roll body of the second dispersion roll is greater than a distance between the rotation axes of the first dispersion roll and the second dispersion roll.

## Patentansprüche

1. Verfahren zur Herstellung einer Bahnenformmasse, umfassend (i) Fallenlassen von Kurzfaserbündeln (2) auf eine Trägerfolie (4a), die mit ihrer Oberfläche annähernd horizontal ausgerichtet verläuft, während die Kurzfaserbündel (2) mit einer Dispersionsrollenvorrichtung (50) verteilt werden, die eine rotierend angetriebene Dispersionsrolle (51), zwei Lager, die die Dispersionsrolle tragen, eine erste Seitenabdeckung (53) und eine zweite Seitenabdeckung (54) aufweist, wodurch eine Fasermatte (3) auf der Trägerfolie (4a) abgeschieden wird, und (ii) Imprägnieren der Fasermatte (3) mit einer wärmehärtenden Harzzusammensetzung, wobei die Dispersionsrollenvorrichtung (50) eine Konfiguration aufweist, bei der die erste Seitenabdeckung und die zweite Seitenabdeckung (54) zwischen den beiden Lagern angeordnet sind; wobei die Dispersionsrolle (51) einen Rollenkörper (510), ein erstes an den Rollenkörper angrenzendes Teil (513) und ein zweites an den Rollenkörper angrenzendes Teil (514) umfasst, wobei der Rollenkörper (510) eine n-fache Rotationssymmetrie um seine Drehachse aufweist, mit der Maßgabe, dass n eine endliche ganze Zahl von 1 oder mehr ist, und das erste an den Rollenkörper angrenzende Teil (513) und das zweite an den Rollenkörper angrenzende Teil (514) an ein Ende bzw. und das andere Ende des Rollenkörpers (510) in dessen axialer Richtung angrenzen; und eine innere Umfangsfläche einer kreisförmigen Öffnung, die in der ersten Seitenabdeckung bereitgestellt ist, und eine zylindrische Umfangsfläche des ersten an den Rollenkörper angrenzenden Teils einander gegenüberliegen, während eine innere Umfangsfläche einer kreisförmigen Öffnung, die in der zweiten Seitenabdeckung bereitgestellt ist, und eine zylindrische Umfangsfläche des zweiten an den Rollenkörper angrenzenden Teils, einander gegenüberliegen.

2. Verfahren zur Herstellung nach Anspruch 1, wobei ein Radius der zylindrischen Umfangsfläche des ersten an den Rollenkörper angrenzenden Teils und ein Radius der zylindrischen Umfangsfläche des zweiten an den Rollenkörper angrenzenden Teils gleich oder größer als ein maximaler Radius des Rollenkörpers sind.

3. Verfahren zur Herstellung nach Anspruch 1 oder 2, wobei der Rollenkörper vom Käfigrollentyp ist und eine Vielzahl von Stäben oder Drähten aufweist, die zwischen einem Stützelement, das in dem ersten an den Rollenkörper angrenzenden Teil enthalten ist, und einem Stützelement, das in dem zweiten an den Rollenkörper angrenzenden Teil enthalten ist, gespannt sind.

4. Verfahren zur Herstellung nach einem der Ansprüche 1 bis 3, wobei die innere Umfangsfläche der kreisförmigen Öffnung, die in jeder der ersten Seitenabdeckung und der zweiten Seitenabdeckung bereitgestellt ist, aus einem Harz hergestellt ist, und die zylindrische Umfangsfläche jedes des ersten an den Rollenkörper angrenzenden Teils und des zweiten an den Rollenkörper angrenzenden Teils aus einem Metall hergestellt ist.

5. Verfahren zur Herstellung nach einem der Ansprüche 1 bis 4, wobei die innere Umfangsfläche der kreisförmigen Öffnung, die in jeder der ersten Seitenabdeckung und der zweiten Seitenabdeckung bereitgestellt ist, aus einem Metall hergestellt ist, und die zylindrische Umfangsfläche jedes des ersten an den Rollenkörper angrenzenden Teils und des zweiten an den Rollenkörper angrenzenden Teils aus einem Harz hergestellt ist.

6. Verfahren zur Herstellung nach Anspruch 4 oder 5, wobei das Harz ein beliebiges ausgewählt aus einem Tetrafluorethylenharz, Polyacetal, Nylon, Polyethylen, einem Phenolharz, Polyimid, Polyphenylensulfid, Polyetheretherketon und Polyamidimid umfasst.

7. Verfahren zur Herstellung nach einem der Ansprüche 1 bis 6, wobei ein Spalt zwischen der inneren Umfangsfläche der kreisförmigen Öffnung, die in der ersten Seitenabdeckung bereitgestellt ist, und der zylindrischen Umfangsfläche des ersten an den Rollenkörper angrenzenden Teils, und ein Spalt zwischen der inneren Umfangsfläche der kreisförmigen Öffnung, die in der zweiten Seitenabdeckung bereitgestellt ist, und der zylindrischen Umfangsfläche des zweiten an den Rollenkörper angrenzenden Teils jeweils 10 mm oder weniger, 5 mm oder weniger, 3 mm oder weniger, 1 mm oder weniger oder 0,5 mm oder weniger beträgt.

8. Verfahren zur Herstellung nach einem der Ansprüche 1 bis 7, wobei die Dispersionsrollenvorrichtung mindestens eine der folgenden Bedingungen (A) und (B) erfüllt:
(A) die erste Seitenabdeckung umfasst einen ersten Abdeckungshauptkörper und einen ersten Ring, der an dem ersten Abdeckungshauptkörper befestigt ist, und ein Loch des ersten Rings entspricht der kreisförmigen Öffnung, die in der ersten Seitenabdeckung bereitgestellt ist; und
(B) die zweite Seitenabdeckung umfasst einen zweiten Abdeckungshauptkörper und einen zweiten Ring, der an dem zweiten Abdeckungshauptkörper befestigt ist, und ein Loch des zweiten Rings entspricht der kreisförmigen Öffnung, die in der zweiten Seitenabdeckung bereitgestellt ist.

9. Verfahren zur Herstellung nach Anspruch 8, das weiter umfasst Bereitstellen der Dispersionsrollenvorrichtung, wobei beim Bereitstellen der Dispersionsrollenvorrichtung, wenn die Dispersionsrollenvorrichtung die Bedingung (A) erfüllt, das erste an den Rollenkörper angrenzende Teil durch das Loch des ersten Rings eingeführt wird, woraufhin der erste Ring am ersten Deckelhauptkörper befestigt wird, während wenn die Dispersionsrollenvorrichtung die Bedingung (B) erfüllt, das zweite an den Rollenkörper angrenzende Teil durch das Loch des zweiten Rings eingeführt wird, woraufhin der zweite Ring am zweiten Deckelhauptkörper befestigt wird.

10. Verfahren zur Herstellung nach Anspruch 8 oder 9, wobei wenn die Dispersionsrollenvorrichtung die Bedingung (A) erfüllt, eine Position des ersten Rings, der am ersten Abdeckungshauptkörper befestigt ist, innerhalb einer Ebene senkrecht zur Drehachse der Dispersionsrolle variabel ist, während, wenn die Dispersionsrollenvorrichtung die Bedingung (B) erfüllt, eine Position des zweiten Rings, der am Hauptkörper der zweiten Abdeckung befestigt ist, innerhalb einer Ebene senkrecht zur Drehachse der Dispersionsrolle variabel ist.

11. Verfahren zur Herstellung nach einem der Ansprüche 1 bis 10, wobei ein vertikaler Abstand von der Drehachse der Dispersionsrolle zu jeder der oberen und unteren Kanten der ersten Seitenabdeckung, ein horizontaler Abstand von der Drehachse der Dispersionsrolle zu jeder der vorderen und hinteren Kanten der ersten Seitenabdeckung, ein vertikaler Abstand von der Drehachse der Dispersionsrolle zu jeder der oberen und unteren Kanten der zweiten Seitenabdeckung und ein horizontaler Abstand von der Drehachse der Dispersionsrolle zu jeder der vorderen und hinteren Kanten der zweiten Seitenabdeckung jeweils größer als ein maximaler Radius des Rollenkörpers sind.

12. Verfahren zur Herstellung nach einem der Ansprüche 1 bis 11, wobei ein Paar Reglerplatten zwischen der ersten Seitenabdeckung und der zweiten Seitenabdeckung parallel zur Verlaufsrichtung der Trägerfolie angeordnet ist und der Rollenkörper der Dispersionsrolle sowohl durch eine Öffnung in einer des Paars von Reglerplatten als auch durch eine Öffnung in der anderen des Paars von Reglerplatten geführt wird.

13. Verfahren zur Herstellung nach Anspruch 12, wobei die Öffnung in einer des Paars von Reglerplatten und die Öffnung in der anderen des Paars von Reglerplatten beide kreisförmig sind und einen Radius aufweisen, der größer als der maximale Radius des Rollenkörpers ist.

14. Verfahren zur Herstellung nach einem der Ansprüche 1 bis 13, wobei die Kurzfaserbündel Kohlenstofffasern umfassen.

15. Dispersionsrollenvorrichtung (50) zum Verteilen von Kurzfaserbündeln (2), die bei der Herstellung einer Bahnenformmasse auf eine Trägerfolie (4a) fallen gelassen werden, umfassend eine Dispersionsrolle mit Rotationsantrieb (51), zwei Lager, die die Dispersionsrolle tragen, eine erste Seitenabdeckung (53),
und eine zweite Seitenabdeckung (54), wobei:
die erste Seitenabdeckung und die zweite Seitenabdeckung zwischen den beiden Lagern angeordnet sind; die Dispersionsrolle einen Rollenkörper (510), ein erstes an den Rollenkörper angrenzendes Teil (513) und ein zweites an den Rollenkörper angrenzendes Teil (514) umfasst,
wobei der Rollenkörper einen Zylinder und eine Vielzahl von Stiften umfasst, die an einer Umfangsfläche des Zylinders bereitgestellt sind, und das erste an den Rollenkörper angrenzende Teil und das zweite an den Rollenkörper angrenzende Teil an einem Ende bzw. dem anderen Ende des Rollenkörpers in dessen axialer Richtung angrenzen; und eine innere Umfangsfläche einer kreisförmigen Öffnung, die in der ersten Seitenabdeckung bereitgestellt ist, und eine zylindrische Umfangsfläche des ersten an den Rollenkörper angrenzenden Teils einander gegenüberliegen, während eine innere Umfangsfläche einer kreisförmigen Öffnung, die in der zweiten Seitenabdeckung bereitgestellt ist, und eine zylindrische Umfangsfläche des zweiten an den Rollenkörper angrenzenden Teils einander gegenüberliegen.

16. Vorrichtung nach Anspruch 15, wobei ein Radius der zylindrischen Umfangsfläche des ersten an den Rollenkörper angrenzenden Teils und ein Radius der zylindrischen Umfangsfläche des zweiten an den Rollenkörper angrenzenden Teils gleich dem des Zylinders sind.

17. Vorrichtung nach Anspruch 15, wobei ein Radius der zylindrischen Umfangsfläche des ersten an den Rollenkörper angrenzenden Teils und ein Radius der zylindrischen Umfangsfläche des zweiten an den Rollenkörper angrenzenden Teils größer sind als der des Zylinders.

18. Vorrichtung nach einem der Ansprüche 15 bis 17, wobei der Zylinder einen Durchmesser von 30 mm bis 300 mm aufweist.

19. Vorrichtung nach einem der Ansprüche 15 bis 18, wobei die Dispersionsrolle eine Welle aufweist, die in ihrer axialen Richtung durch den Rollenkörper, das erste an den Rollenkörper angrenzende Teil und das zweiten an den Rollenkörper angrenzende Teil hindurchragt, und wobei der Durchmesser der Welle kleiner als der des Zylinders ist.

20. Vorrichtung nach einem der Ansprüche 15 bis 19, wobei ein Spalt zwischen der inneren Umfangsfläche der kreisförmigen Öffnung, die in der ersten Seitenabdeckung bereitgestellt ist, und der zylindrischen Umfangsfläche des ersten an den Rollenkörper angrenzenden Teils, und ein Spalt zwischen der inneren Umfangsfläche der kreisförmigen Öffnung, die in der zweiten Seitenabdeckung bereitgestellt ist, und der zylindrischen Umfangsfläche des zweiten an den angrenzenden Rollenkörper Teils kleiner als eine Länge des längsten Stifts unter der Vielzahl von Stiften ist.

21. Vorrichtung nach einem der Ansprüche 15 bis 20, wobei die Dispersionsrollenvorrichtung eine erste Dispersionsrolle und eine zweite Dispersionsrolle aufweist, die jeweils als Dispersionsrolle dienen und nebeneinander angeordnet sind, sodass ihre Drehachsen parallel zueinander verlaufen.

22. Vorrichtung nach Anspruch 21, wobei die erste Dispersionsrolle so rotierend angetrieben wird, dass sich ihre Stifte von oben auf ihrer der zweiten Dispersionsrolle zugewandten Seite nach unten bewegen, und die zweite Dispersionsrolle so rotierend angetrieben wird, dass sich ihre Stifte von oben auf ihrer der ersten Dispersionsrolle zugewandten Seite nach unten bewegen.

23. Vorrichtung nach Anspruch 21 oder 22, wobei die Summe aus dem maximalen Radius des Rollenkörpers der ersten Dispersionsrolle und dem maximalen Radius des Rollenkörpers der zweiten Dispersionsrolle größer als der Abstand zwischen den Drehachsen der ersten Dispersionsrolle und der zweiten Dispersionsrolle ist.

## Revendications

1. Procédé de fabrication d'un composé de moulage de feuille, comprenant (i) le fait de laisser des faisceaux de fibres courtes (2) tomber sur un film porteur (4a) se déplaçant avec sa surface orientée approximativement à l'horizontale, tout en dispersant les faisceaux de fibres courtes (2) en utilisant un dispositif (50) formant rouleau de dispersion, présentant un rouleau de dispersion (51) entraîné en rotation, deux paliers supportant le rouleau de dispersion, un premier flasque latéral (53) et un second flasque latéral (54), déposant ainsi un mat fibreux (3) sur le film porteur (4a), et (ii) le fait d'imprégner le mat fibreux (3) avec une composition de résine thermodurcissable, dans lequel le dispositif (50) formant rouleau de dispersion présente une configuration dans laquelle le premier flasque latéral et le second flasque latéral (54) sont disposés entre les deux paliers ; le rouleau de dispersion (51) comprend un corps de rouleau (510), une première partie (513) attenante au corps de rouleau, et une seconde partie (514) attenante au corps de rouleau, dans lequel le corps de rouleau (510) présente une symétrie de rotation n fois autour de son axe de rotation, à condition que le n soit un nombre entier fini de 1 ou plus, et la première partie (513) attenante au corps de rouleau et la seconde partie (514) attenante au corps de rouleau sont respectivement attenantes à une extrémité et à l'autre extrémité du corps de rouleau (510) dans sa direction axiale ; et une surface circonférentielle interne d'une ouverture circulaire aménagée dans le premier flasque latéral et une surface circonférentielle cylindrique de la première partie attenante au corps de rouleau sont mutuellement en face l'une de l'autre, tandis qu'une surface circonférentielle interne d'une ouverture circulaire aménagée dans le second flasque latéral et une surface circonférentielle cylindrique de la seconde partie attenante au corps de rouleau sont mutuellement en face l'une de l'autre.

2. Procédé de fabrication selon la revendication 1, dans lequel un rayon de la surface circonférentielle cylindrique de la première partie attenante au corps de rouleau et un rayon de la surface circonférentielle cylindrique de la seconde partie attenante au corps de rouleau sont supérieurs ou égaux à un rayon maximum du corps de rouleau.

3. Procédé de fabrication selon la revendication 1 ou revendication 2, dans lequel le corps de rouleau est un type rouleau à cage, et présente une pluralité de tiges ou fils s'étendant entre un élément de support contenu dans la première partie attenante au corps de rouleau et un élément de support contenu dans la seconde partie attenante au corps de rouleau.

4. Procédé de fabrication selon l'une quelconque des revendications 1 à 3, dans lequel la surface circonférentielle interne de l'ouverture circulaire située dans chaque flasque latéral parmi le premier flasque latéral et le second flasque latéral est faite en une résine, et la surface circonférentielle cylindrique de chaque partie attenante parmi la première partie attenante au corps de rouleau et la seconde partie attenante au corps de rouleau est faite en un métal.

5. Procédé de fabrication selon l'une quelconque des revendications 1 à 4, dans lequel la surface circonférentielle interne de l'ouverture circulaire aménagée dans chaque flasque latéral parmi le premier flasque latéral et le second flasque latéral est faite en un métal, et la surface circonférentielle cylindrique de chaque partie attenante parmi la première partie attenante au corps de rouleau et la seconde partie attenante au corps de rouleau est faite en une résine.

6. Procédé de fabrication selon la revendication 4 ou la revendication 5, dans lequel la résine comprend l'un quelconque, sélectionné, parmi une résine de tétrafluoroéthylène, le polyacétal, le nylon, le polyéthylène, une résine de phénol, le polyimide, le sulfure de polyphénylène, le polyétheréthercétone et le polyamide-imide.

7. Procédé de fabrication selon l'une quelconque des revendications 1 à 6, dans lequel un espace entre la surface circonférentielle interne de l'ouverture circulaire aménagée dans le premier flasque latéral et la surface circonférentielle cylindrique de la première partie attenante au corps de rouleau, et un espace entre la surface circonférentielle interne de l'ouverture circulaire aménagée dans le second flasque latéral et la surface circonférentielle cylindrique de la seconde partie attenante au corps de rouleau sont tous les deux de 10 mm ou moins, de 5 mm ou moins, de 3 mm ou moins, de 1 mm ou moins, ou de 0,5 mm ou moins.

8. Procédé de fabrication selon l'une quelconque des revendications 1 à 7, dans lequel le dispositif formant rouleau de dispersion satisfait au moins une des conditions (A) et (B) ci-dessous :
(A) le premier flasque latéral comprend un corps principal de premier flasque et une première bague fixée au corps principal de premier flasque, et un trou de la première bague correspond à l'ouverture circulaire aménagée dans le premier flasque latéral ; et
(B) le second flasque latéral comprend un corps principal de second flasque et une seconde bague fixée au corps principal de second flasque, et un trou de la seconde bague correspond à l'ouverture circulaire aménagée dans le second flasque latéral.

9. Procédé de fabrication selon la revendication 8, qui comprend en outre le fait de se mettre à disposition le dispositif formant rouleau de dispersion, dans lequel, lors de la mise à disposition du dispositif formant rouleau de dispersion, lorsque le dispositif formant rouleau de dispersion satisfait la condition (A), la première partie attenante au corps de rouleau est insérée au travers du trou de la première bague, suivie par le fait de fixer la première bague au corps principal de premier flasque, tandis que lorsque le dispositif formant rouleau de dispersion satisfait la condition (B), la seconde partie attenante au corps de rouleau est insérée au travers du trou de la seconde bague, suivie du fait de fixer la seconde bague au corps principal de second flasque.

10. Procédé de fabrication selon la revendication 8 ou la revendication 9, dans lequel, lorsque le dispositif formant rouleau de dispersion satisfait la condition (A), une position de la première bague fixée au corps principal de premier flasque est variable dans un plan perpendiculaire à l'axe de rotation du rouleau de dispersion, tandis que, lorsque le dispositif formant rouleau de dispersion satisfait la condition (B), une position de la seconde bague fixée au corps principal de second flasque est variable dans un plan perpendiculaire à l'axe de rotation du rouleau de dispersion.

11. Procédé de fabrication selon l'une quelconque des revendications 1 à 10, dans lequel une distance verticale depuis l'axe de rotation du rouleau de dispersion jusqu'à chacun des bords supérieur et inférieur du premier flasque latéral, une distance horizontale depuis l'axe de rotation du rouleau de dispersion jusqu'à chacun des bords avant et arrière du premier flasque latéral, une distance verticale depuis l'axe de rotation du rouleau de dispersion jusqu'à chacun des bords supérieur et inférieur du second flasque latéral, et une distance horizontale depuis l'axe de rotation du rouleau de dispersion jusqu'à chacun des bords avant et arrière du second flasque latéral sont chacune plus grandes qu'un rayon maximum du corps de rouleau.

12. Procédé de fabrication selon l'une quelconque des revendications 1 à 11, dans lequel une paire de plaques de régulation sont disposées entre le premier flasque latéral et le second flasque latéral parallèlement à la direction de déplacement du film porteur, et le corps de rouleau du rouleau de dispersion traverse à la fois une ouverture dans une plaque de la paire de plaques de régulation et une ouverture dans l'autre plaque de la paire de plaques de régulation.

13. Procédé de fabrication selon la revendication 12, dans lequel l'ouverture dans une plaque de la paire de plaques de régulation et l'ouverture dans l'autre plaque de la paire de plaques de régulation sont toutes les deux circulaires et présentent un rayon plus grand qu'un rayon maximum du corps de rouleau.

14. Procédé de fabrication selon l'une quelconque des revendications 1 à 13, dans lequel les faisceaux de fibres courtes comprennent des fibres de carbone.

15. Dispositif (50) formant rouleau de dispersion utilisé pour disperser des faisceaux (2) de fibres courtes qu'on laisse tomber sur un film porteur (4a) lors de la production d'un composé de moulage de feuille, comprenant un rouleau de dispersion (51) à entraînement en rotation, deux paliers supportant le rouleau de dispersion, un premier flasque latéral (53) et un second flasque latéral (54), dans lequel :
le premier flasque latéral et le second flasque latéral sont disposés entre les deux paliers ; le rouleau de dispersion comprend un corps de rouleau (510), une première partie (513) attenante au corps de rouleau et une seconde partie (514) attenante au corps de rouleau,
dans lequel le corps de rouleau comprend un cylindre et une pluralité de broches situées sur une surface circonférentielle du cylindre, et la première partie attenante au corps de rouleau et la seconde partie attenante au corps de rouleau sont respectivement attenantes à une extrémité et à l'autre extrémité du corps de rouleau dans sa direction axiale ; et une surface circonférentielle interne d'une ouverture circulaire aménagée dans le premier flasque latéral et une surface circonférentielle cylindrique de la première partie attenante au corps de rouleau sont mutuellement en face l'une de l'autre, tandis qu'une surface circonférentielle interne d'une ouverture circulaire aménagée dans le second flasque latéral et une surface circonférentielle cylindrique de la seconde partie attenante au corps de rouleau sont mutuellement en face l'une de l'autre.

16. Dispositif selon la revendication 15, dans lequel un rayon de la surface circonférentielle cylindrique de la première partie attenante au corps de rouleau et un rayon de la surface circonférentielle cylindrique de la seconde partie attenante au corps de rouleau sont égaux à celui du cylindre.

17. Dispositif selon la revendication 15, dans lequel un rayon de la surface circonférentielle cylindrique de la première partie attenante au corps de rouleau et un rayon de la surface circonférentielle cylindrique de la seconde partie attenante au corps de rouleau sont plus grands que celui du cylindre.

18. Dispositif selon l'une quelconque des revendications 15 à 17, dans lequel le cylindre présente un diamètre allant de 30 mm à 300 mm.

19. Dispositif selon l'une quelconque des revendications 15 à 18, dans lequel le rouleau de dispersion présente un arbre pénétrant à travers le corps de rouleau, la première partie attenante au corps de rouleau et la seconde partie attenante au corps de rouleau dans sa direction axiale, et un diamètre de l'arbre est plus petit que celui du cylindre.

20. Dispositif selon l'une quelconque des revendications 15 à 19, dans lequel un espace entre la surface circonférentielle interne de l'ouverture circulaire aménagée dans le premier flasque latéral et la surface circonférentielle cylindrique de la première partie attenante au corps de rouleau, et un espace entre la surface circonférentielle interne de l'ouverture circulaire aménagée dans le second flasque latéral et la surface circonférentielle cylindrique de la seconde partie attenante au corps de rouleau sont tous les deux plus petits qu'une longueur de la plus longue broche parmi la pluralité de broches.

21. Dispositif selon l'une quelconque des revendications 15 à 20, dans lequel le dispositif formant rouleau de dispersion présente un premier rouleau de dispersion et un second rouleau de dispersion, chacun en tant que rouleau de dispersion, qui sont agencés côte à côte de telle sorte que leurs axes de rotation sont parallèles l'un à l'autre.

22. Dispositif selon la revendication 21, dans lequel le premier rouleau de dispersion est entraîné en rotation de telle sorte que ses broches se déplacent vers le bas depuis le haut sur son côté faisant face au second rouleau de dispersion, et le second rouleau de dispersion est entraîné en rotation de telle sorte que ses broches se déplacent vers le bas depuis le haut sur son côté faisant face au premier rouleau de dispersion.

23. Dispositif selon la revendication 21 ou la revendication 22, dans lequel une somme d'un rayon maximum du corps de rouleau du premier rouleau de dispersion et d'un rayon maximum du corps de rouleau du second rouleau de dispersion est supérieure à une distance entre les axes de rotation du premier rouleau de dispersion et du second rouleau de dispersion.
